# EUROPÄISCHE PATENTSCHRIFT

(11) **EP 2 987 223 B1**
(45) Veröffentlichungstag und Bekanntmachung des Hinweises auf die Patenterteilung: **25.04.2018**
(21) Anmeldenummer: 14720508.2
(22) Anmeldetag: 10.04.2014
(51) Int. Cl.: H02K 1/27

(54) **ROTOR UND VERFAHREN ZUM HERSTELLEN EINES ROTORS**
ROTOR AND METHOD FOR PRODUCING A ROTOR
ROTOR ET PROCÉDÉ SERVANT À FABRIQUER UN ROTOR

(30) Priorität: 16.04.2013 DE 102013206787
(43) Veröffentlichungstag der Anmeldung: 24.02.2016
(73) Patentinhaber: Efficient Energy GmbH, 85622 Feldkirchen (DE)
(72) Erfinder: SEDLAK, Holger, 82054 Lochhofen / Sauerlach (DE); KNIFFLER, Oliver, 82054 Sauerlach (DE)
(74) Vertreter: Zinkler, Franz
(86) Internationale Anmeldenummer: PCT/EP2014/057280
(87) Internationale Veröffentlichungsnummer: WO 2014/170207

(56) Entgegenhaltungen:
- EP-A2- 0 204 289
- US-A- 5 345 669

## Beschreibung

Die vorliegende Erfindung bezieht sich auf einen Rotor und insbesondere auf einen Rotor mit Permanentmagneten für einen Elektromotor.

Elektromotoren werden in vielerlei Anwendungen eingesetzt. Insbesondere für Anwendungen, bei denen hohe Drehzahlen gefordert werden, wie beispielsweise bei Elektromotoren zum Antreiben eines Radialkompressors, ist eine hohe Laufruhe des Motors wichtig. Dies bedeutet, dass der Motor auch bei hohen Drehzahlen möglichst ruhig laufen soll, um keine Vibrationen auf das gesamte System, in dem der Motor eingebaut ist, zu übertragen.

Bei Rotoren, die für solche Motoren eingesetzt werden, sind üblicherweise Permanentmagnete auf einer Rotorwelle befestigt. Hierbei wird z.B. eine metallische Rotorwelle genommen. Auf diese Rotorwelle werden dann zwei oder mehrere Permanentmagnete aufgebracht. Diese Permanentmagnete können z.B. auf die metallische Rotorwelle, die z.B. aus Werkzeugstahl gemacht ist, aufgeklebt werden. Insbesondere bei hohen Drehzahlen ist es wichtig, dass die Permanentmagnete ausreichend fest an der Rotorwelle befestigt sind, damit es zum einen keinen Schlupf zwischen den Permanentmagneten und der Rotorwelle gibt, und damit sich andererseits die Permanentmagnete nicht vom Rotor ablösen. Insbesondere bei hohen Drehzahlen sind die Fliehkräfte auf die Permanentmagnete ganz enorm. Auch die Scherkräfte zwischen den Permanentmagneten und der Rotorwelle sind hoch, insbesondere wenn der Motor unter Last steht, wenn also Kräfte auftreten, die die Permanentmagnete bezüglich der Rotorwelle "verdrehen" möchten.

Darüber hinaus werden solche Permanentmagnet-Synchronmotoren dadurch angetrieben, dass ein rotierendes magnetisches Feld durch einen Stator mit wenigstens drei Statorspulen erzeugt wird, das den Rotor mit den Permanentmagneten antreibt. Dies wird dadurch bewirkt, dass die "augenblickliche" Magnetfeldsituation innerhalb eines Stators der Ausrichtung der Magnetfelder des Rotors in Drehrichtung des Motors "vorauseilt", so dass der Rotor durch das immer etwas vorauseilende Magnetfeld, das durch Ansteuerung der Statorspulen erzeugt wird, "nachgezogen" wird.

Einen solchen Permanentmagnet-Synchronmotor kann man genauso auch als elektrischen Generator betreiben. Hierbei wird der Rotor durch eine mechanische Kraft angetrieben, und die Bewegung des Rotors mit seinem Permanentmagneten bewirkt eine Induktionsspannung in den wenigstens drei Statorspulen.

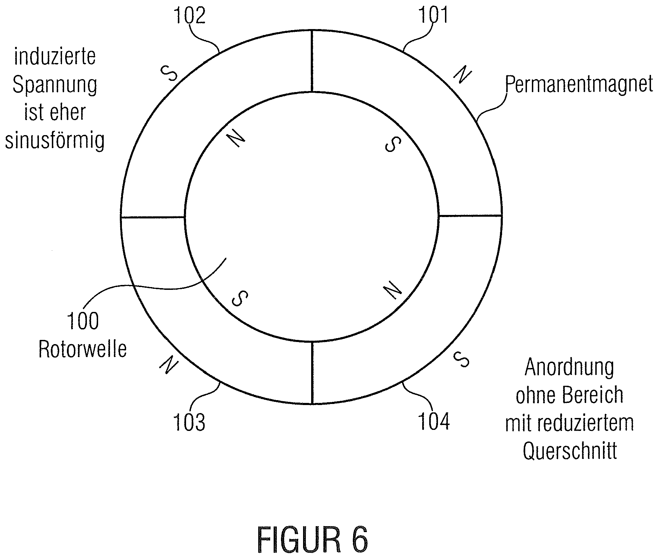

Ein solcher beispielhafter Rotor ist in Fig. 6 gezeigt. Fig. 6 zeigt eine Rotorwelle 100, auf der vier schematisch gezeichnete Permanentmagnete 101, 102, 103, 104 aufgebracht sind. Die einzelnen Permanentmagnete sind in 90°-Sektoren angebracht und so magnetisiert, dass außen und innen jeweils abwechselnde magnetische Nordpole N und magentische Südpole S angeordnet sind, wie es in Fig. 6 schematisch gezeichnet ist. Rotiert man einen in Fig. 6 im Querschnitt gezeichneten Rotor innerhalb eines Stators, der wenigstens drei Spulen aufweist, so kann man an jedem Spulenanschluss eine nahezu sinusförmige elektrische Induktionsspannung erfassen.

Der in Fig. 6 gezeigte Rotor ist aus verschiedenen Gründen nicht optimal.

Ein Grund besteht in der reduzierten mechanischen Stabilität. Aufgrund der Scherkräfte zwischen der Oberfläche der Rotorwelle 100 und der angrenzenden Oberfläche der Permanentmagnete kann es zu einem Schlupf zwischen dem Ring aus Permanentmagneten einerseits und der Rotorwelle andererseits kommen, bzw. es wird eine hohe Belastung auf die z.B. verwendete Klebeverbindung ausgeübt. Dies kann dazu führen, dass die Permanentmagnete sich von der Rotorwelle teilweise oder ganz lösen, was insbesondere bei hohen Drehzahlen sogar dazu führen kann, dass sich die Permanentmagnete teilweise ablösen und auf die angrenzenden Statorelemente aufschlagen und dort zu einer Zerstörung des Motors führen.

Ein weiterer Grund besteht darin, dass die induzierte Spannung in den drei Statorspulen im Falle eines Generatorbetriebs sinusförmig ist, und dass auch die Spannung, die an die drei Statorspulen anzulegen ist, um den Motor im Motorbetrieb zu betreiben, sinusförmig sein wird. Eine Umschaltung einer sinusförmigen Spannung ist jedoch allgemein und insbesondere in einer digitalen Umgebung nachteilhaft. Ein Rotor mit einer Rotorwelle mit einem Befestigungsabschnitt entlang eines Befestigungsbereichs der Welle und einer Mehrzahl von Permanentmagneten, die in dem Befestigungsabschnitt an der Rotorwelle befestigt sind, ist aus dem EP0201289 bekannt. Die Aufgabe der vorliegenden Erfindung besteht darin, ein verbessertes Rotorkonzept zu schaffen.

Diese Aufgabe wird durch einen Rotor nach Patentanspruch 1 oder einen Elektromotor oder Generator nach Patentanspruch 8 oder ein Verfahren zum Herstellen eines Rotors nach Patentanspruch 9 gelöst.

Die vorliegende Erfindung basiert auf der Erkenntnis, dass keine im Querschnitt ringsektorförmigen Permanentmagnete auf einer Welle mit kreisrundem Querschnitt aufgebracht werden, sondern dass die Welle einen Bereich mit bezüglich eines kreisrunden Querschnitts reduziertem Radius aufweist, so dass eine radial gemessene Dicke eines Permanentmagneten in dem Bereich größer als in einem angrenzenden Bereich mit kreisrundem Querschnitt der Rotorwelle ist.

Durch diesen Bereich mit reduziertem Radius der Rotorwelle werden verschiedene Vorteile erreicht. Ein Vorteil besteht darin, dass die mechanische Verbindung zwischen dem Permanentmagnet und der Rotorwelle gegen tangentiale Scherkräfte verbessert ist, weil sich das Material der Rotorwelle mit dem Material der Permanentmagneten gewissermaßen "verzahnt". Die Kraftübertragung von der Rotorwelle auf den Permanentmagneten bzw. umgekehrt findet also nicht allein durch eine Klebstoffschicht oder etwas Ähnliches statt, sondern dadurch, dass das Material der beiden Komponenten sich gewissermaßen "verhakt". Ein weiterer Vorteil besteht darin, dass durch die nunmehr entlang des Umfangs variierende effektive Dicke des Permanentmagneten eine entlang des Umfangs variierende Dicke von konzeptionellen Elementarmagneten stattfindet, was zu einer induzierten Spannungsform in den Statorspulen führt, die nicht mehr sinusförmig, sondern stärker rechteckförmig ist. Dies erlaubt eine wesentlich weniger aufwändige Ausführung der elektrischen Schaltungen zum Verarbeiten dieser Spannung im Generatorbetrieb bzw. zum Erzeugen dieser Spannungen im Motorbetrieb.

Die Variation der effektiven Dicke des Permanentmagneten wird bei einem Ausführungsbeispiel noch dadurch verbessert, um noch eine stärker rechteckförmige Spannung zu erreichen, indem die Permanentmagneten nicht radial magnetisiert werden, sondern horizontal bzw. tangential, je nach Stellung der Magneten magnetisiert werden. Dadurch ist an jedem Punkt des Permanentmagneten eine effektive Magnetdicke vorhanden, die dicker ist als die radiale Dicke des Permanentmagneten, abgesehen von einem kleinen Bereich am Rand eines Permanentmagneten. Ferner kann auch in der Mitte eines Permanentmagneten aufgrund des Bereichs mit reduzierten Querschnitt, der durch Magnetmaterial "aufgefüllt wird", eine größere effektive, magnetische Dicke erreicht werden, weil die Permanentmagneten nicht radial magnetisiert sind, sondern horizontal bzw. tangential magnetisiert sind.

Der Bereich mit reduziertem Radius erstreckt sich nicht über einen gesamten Viertelkreis bei der Verwendung von vier Permanentmagneten bzw. erstreckt sich nicht über einen wesentlichen Bereich eines Halbkreises bei der Verwendung von nur zwei Permanentmagneten, sondern nimmt lediglich einen bestimmten Bereich ein, so dass neben dem Bereich mit reduziertem Radius auch ein Bereich mit bezüglich des kreisrunden Querschnitts normalem Radius vorhanden ist. Dieser Bereich stellt sicher, dass die Rotorwelle in dem Befestigungsbereich der Welle, wo die Permanentmagneten angebracht sind, nicht zu stark geschwächt wird. Würden die Permanentmagnete nämlich z.B. in einem Befestigungsbereich aufgebracht werden, der rein vierkantförmig ist, in dem also die Welle von einem kreisrunden Querschnitt auf eine Vierkantform reduziert worden ist, so würde die Stabilität der Rotorwelle in diesem Befestigungsbereich deutlich reduziert sein. Insbesondere bei erhöhten Temperaturen und hohen Drehzahlen kann dies dazu führen, dass die Welle in diesem Bereich an Steifigkeit verliert und damit Unrundheiten entstehen, die zu mechanischen Resonanzfrequenzen führen können, die unter oder im Bereich der Nenndrehzahlen des Motors bzw. Generators liegen können, was besonders nachteilhaft ist. Bei Ausführungsbeispielen der vorliegenden Erfindung ist der Bereich mit reduziertem Radius in dem Befestigungsbereich so ausgebildet, dass er weniger als zwei Drittel eines Kreissektors und vorzugsweise sogar weniger als die Hälfte eines Kreissektors, der durch den Permanentmagneten definiert wird, ausfüllt.

Damit wird gemäß der vorliegenden Erfindung ein Rotor geschaffen, der zum einen mechanisch stabil ist und zum anderen elektrisch wirksam ist, um eine leichte Erzeugung bzw. Verarbeitung der Statorspulenspannungen zu ermöglichen.

Bevorzugte Ausführungsbeispiele der vorliegenden Erfindung werden nachfolgend Bezug nehmend auf die beiliegenden Zeichnungen detailliert erläutert. Es zeigen:
- Fig. 1a: eine Draufsicht auf einen Teil eines Rotors mit Querschnittanzeige;
- Fig. 1b: einen Querschnitt des Rotors von Fig. 1a an der angezeigten Stelle;
- Fig. 2: einen Querschnitt durch den Rotor von Fig. 1b, jedoch mit bestimmten Bemaßungen;
- Fig. 3: eine Draufsicht auf einen Rotor mit einem Radialrad eines Kompressors, der z.B. in einer Wärmepumpe einsetzbar ist;
- Fig. 4: eine Detaildarstellung eines Permanentmagneten mit Anzeige der Magnetisierungsrichtung;
- Fig. 5: einen Querschnitt eines Motors oder Generators mit einem erfindungsgemäßen Rotor; und
- Fig. 6: einen Querschnitt durch einen Rotor mit vier Permanentmagneten zum Vergleich mit der vorliegenden Erfindung.

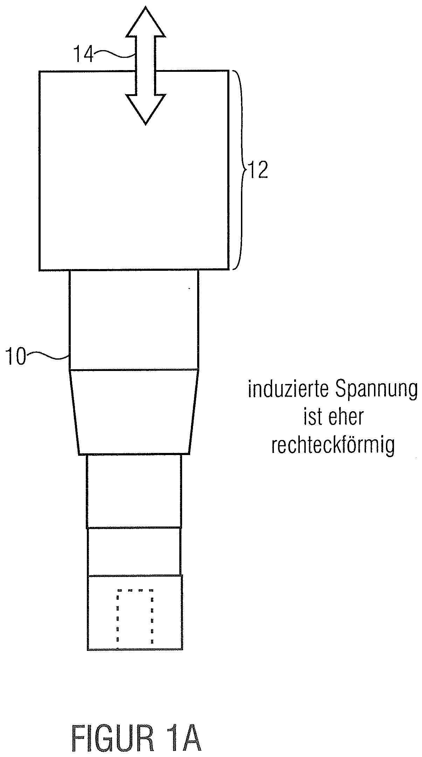

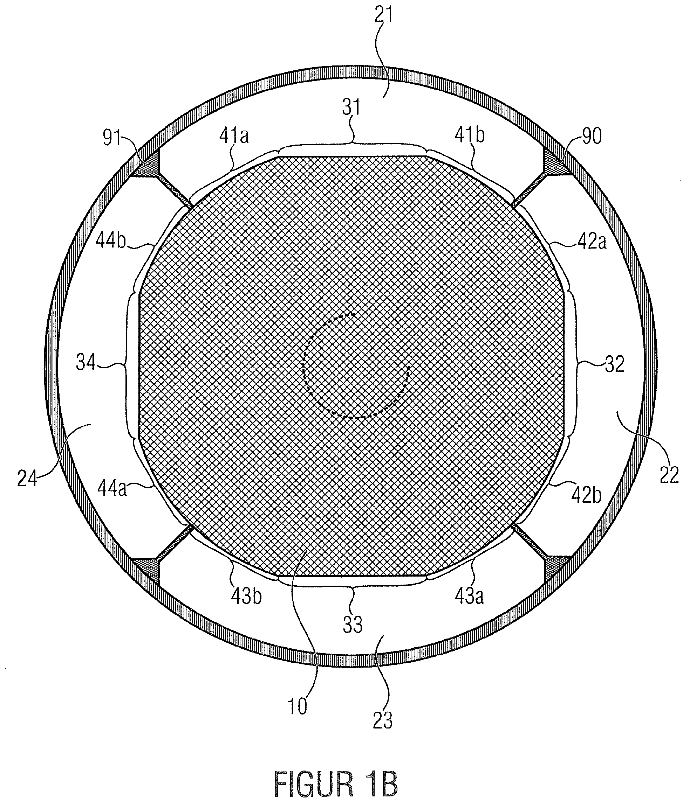

Fig. 1a zeigt eine Draufsicht auf einen Teil eines Rotors mit Schnittdarstellung. Der Rotor umfasst eine Rotorwelle 10 und einen Befestigungsabschnitt 12, der zum Teil in Fig. 1a gezeigt ist. Fig. 1b zeigt einen Querschnitt durch die Rotorwelle an einer Stelle 14 von Fig. 1a. Der Rotor in Fig. 1b umfasst die Rotorwelle 10 im Querschnitt sowie vier Permanentmagnete 21, 22, 23, 24, die in dem Befestigungsabschnitt 12 der Welle an der Welle befestigt sind. Die Welle umfasst in dem Befestigungsabschnitt 12 einen Bereich 31, 32, 33, 34 mit bezüglich eines kreisrunden Querschnitts reduziertem Radius, so dass eine radial gemessene Dicke eines Permanentmagneten in dem Bereich 31, 32, 33, 34 größer als in einem angrenzenden Bereich 41a, 41b, 42a, 42b, 43a, 43b, 44a, 44b mit kreisrundem Querschnitt der Rotorwelle 10 ist. Aus Fig. 1b ist ersichtlich, dass in dem Bereich 31 die radiale Dicke des Permanentmagneten überall größer ist als die radiale Dicke des Permanentmagneten in dem Bereich 41a beispielsweise.

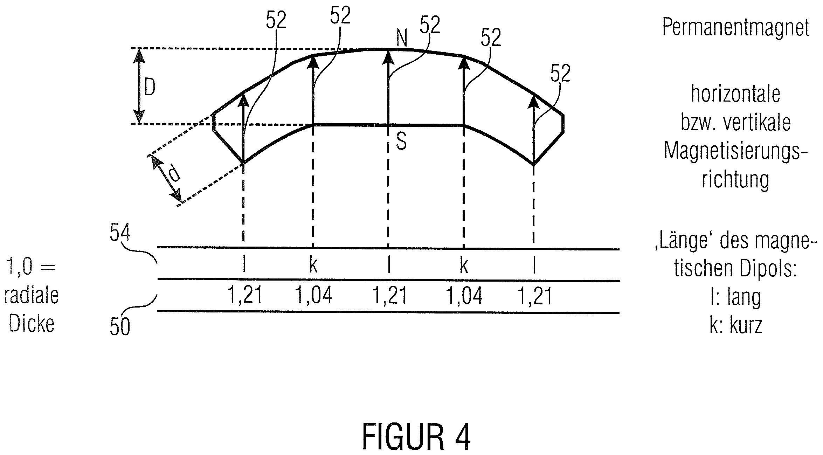

Ein Permanentmagnet ist in Fig. 4 im Detail gezeichnet, wobei die radiale Dicke D im Bereich 31 eingezeichnet ist und die kleinere radiale Dicke d im Bereich mit kreisrundem Querschnitt ebenfalls eingezeichnet ist. Die untere Zeile 50 in Fig. 4 zeigt die vertikale Dicke im Verhältnis zur radialen Dicke d im kreisrundem Bereich. Die vertikale Dicke, die durch die Pfeile 52 entlang des Permanentmagneten symbolisiert ist, hat einen Verlauf, der, von links nach rechts, eine lange vertikale Dicke l, eine kurze vertikale Dicke k, wieder eine lange vertikale Dicke l, wieder eine kurze vertikale Dicke k und wieder eine lange vertikale Dicke l umfasst, wie es durch die Buchstaben "l" und "k" in der Zeile 54 dargestellt ist. Das Verhältnis der entsprechenden vertikalen Dicke des Permanentmagneten zu der radialen Dicke ist dort, wo die vertikale Dicke lang ist, bei etwa 1,21 und dort, wo die radiale Dicke kurz ist, etwa bei 1,04.

Bei einem Ausführungsbeispiel der vorliegenden Erfindung wird der Permanentmagnet so magnetisiert, dass die Richtung der einzelnen "Elementarmagneten" in dem Permanentmagneten genau entlang der Pfeile 52 verläuft. Dies bedeutet, dass die effektive Länge eines Elementarmagneten im Permanentmagneten entlang des Verlaufs des Permanentmagneten wie die vertikale Länge des Permanentmagneten variiert. Diese Variation der effektiven Länge eines elementaren Permanentmagneten führt dazu, dass die induzierte Spannung in einer Statorspule nicht mehr sinusförmig verläuft, sondern einen eher rechteckförmigen Verlauf erfährt. Dies ist insbesondere dann, wenn der Rotor in einem Generator eingesetzt wird, von besonderem Vorteil. Wird der Rotor dagegen in einem Elektromotor eingesetzt, so wird ein optimaler Betrieb dann erreicht, wenn mit einer eher rechteckförmigen Spannung dieser Rotor, wie er z.B. in Fig. 1b im Querschnitt gezeigt ist, angesteuert wird. Eine eher rechteckförmige Spannung ist mit wesentlich geringerem Aufwand z. B. unter Verwendung von einfachen Schalttransistoren zu verarbeiten als eine eher sinusförmige Spannung, insbesondere im Generator- bzw. Elektromotorbetrieb. Die z.B. abgeflachte Stelle 31, 32, 33, 34 der Rotorwelle von Fig. 1b schafft somit zwei Vorteile. Der eine Vorteil besteht in der verbesserten mechanischen Verbindung zwischen Rotorwelle und Permanentmagneten aufgrund der "Verzahnung" der Materialien des Permanentmagneten und der Rotorwelle. Der zweite Vorteil besteht darin, dass eine rechteckförmige elektrische Spannung zum Ansteuern eingesetzt werden kann bzw. induziert wird, wobei die Verarbeitung von eher rechteckförmigen Spannungen mit einfachen Schaltern wesentlich weniger aufwendig möglich ist als wenn sinusförmige Spannungen zu verarbeiten sind.

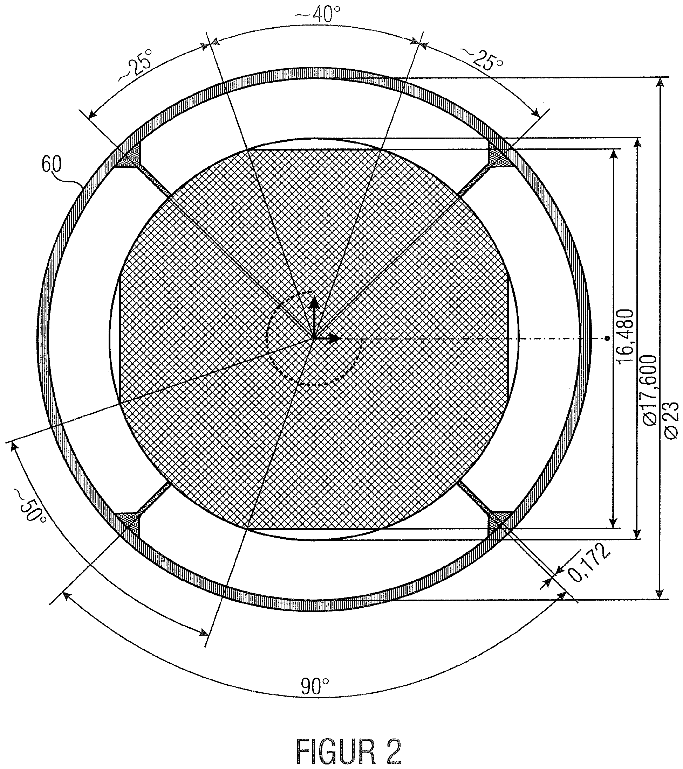

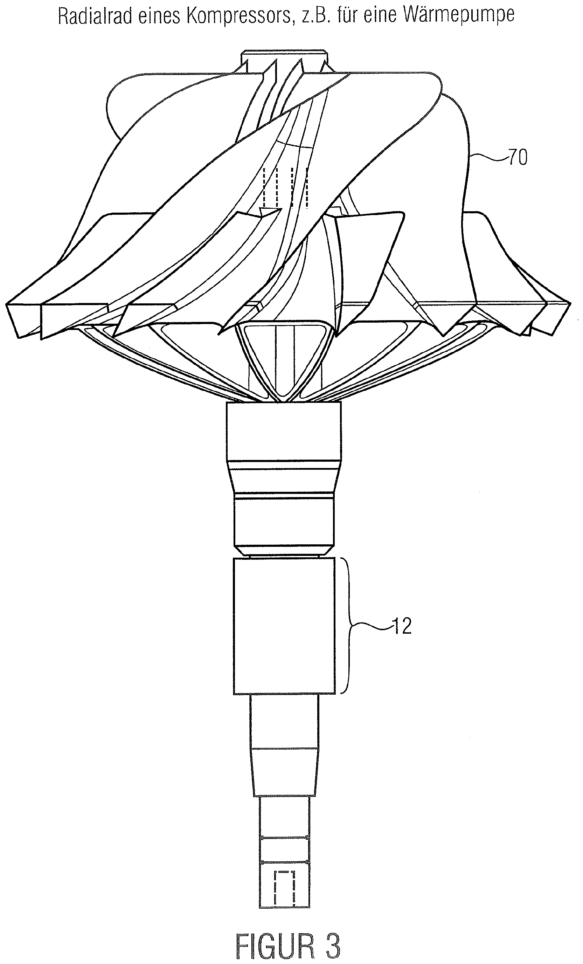

Fig. 2 zeigt einen ähnlichen Querschnitt wie Fig. 1, jedoch mit Bemaßungen. Bei dem in Fig. 2 gezeigten Ausführungsbeispiel eines Rotors für ein Radialrad einer Wärmepumpe, wie es anhand von Fig. 3 noch dargestellt wird, wird es bevorzugt, einen kreisrunden Querschnitt von 17,6 mm zu verwenden. Die abgeflachte Stelle bzw. der Bereich mit reduziertem Radius ist so ausgebildet, dass der Durchmesser dort 16,48 mm beträgt. Die radiale Dicke der Permanentmagneten beträgt 2,7 mm, und der gesamte Rotor ist mit einer ringförmigen Hülse 60 zur Verbesserung der Stabilität umgeben, die relativ dünn ausgebildet ist. Bei einer Implementierung ist der Ring bzw. die kreisförmige Hülse 1,2 mm dick.

Bei einem Ausführungsbeispiel der vorliegenden Erfindung werden vier Permanentmagnete in 90°-Sektoren entlang der Rotorwelle symmetrisch angeordnet, so dass der Bereich mit reduziertem Radius jeweils symmetrisch entlang der Mitte des Permanentmagneten ausgebildet ist. Ferner wird es bevorzugt, den Sektor, den der Bereich mit reduziertem Querschnitt einnimmt, größer als 20° und höchstens 80° groß auszuführen. Bei einem speziellen bevorzugten Ausführungsbeispiel liegt dieser Bereich zwischen 35° und 45° und beträgt bei dem in Fig. 2 gezeigten Ausführungsbeispiel 40°. Der Rest des Befestigungsabschnitts der Welle, also der Bereich, der nicht durch den Bereich mit reduziertem Querschnitt eingenommen wird, wird mit kreisrundem Querschnitt ausgeführt. Bei dem in Fig. 2 gezeigten Ausführungsbeispiel ergibt sich damit immer zwischen zwei Bereichen mit reduziertem Radius der Rotorwelle ein Sektor mit etwa 50°, in dem der Radius bzw. Querschnitt der Rotorwelle nicht reduziert ist. Dies führt zu einer verbesserten mechanischen Stabilität der Rotorwelle im Vergleich dazu, dass die Permanentmagneten auf einem im Querschnitt viereckigen Befestigungsabschnitt der Rotorwelle aufgebracht sind. Damit kann mit dennoch sehr guter mechanischer Stabilität eine hohe Drehzahl erreicht werden, ohne dass die Drehzahl, die gewünscht wird, in den Bereich von mechanischen Resonanzen kommt.

Bei einer Ausführungsform der vorliegenden Erfindung ist, wie es in Fig. 3 gezeigt ist, der Rotor mit einem Radialrad 70 verbunden, wobei der Befestigungsabschnitt 12 in Fig. 3 ebenfalls gezeigt ist. Das Radialrad 70 ist ausgebildet, um in einem Kompressor einer Wärmepumpe verdampfte Arbeitsflüssigkeit zu komprimieren. Es wird vorzugsweise in dieser Wärmepumpe Wasser als Arbeitsflüssigkeit eingesetzt, wobei zum Verdichten von Wasserdampf dann, wenn die Abmessungen der Wärmepumpen in erträglichen Maßen sein sollen, hohe Drehzahlen benötigt werden, die durch den erfindungsgemäßen Rotor sicher und effizient erreicht werden können.

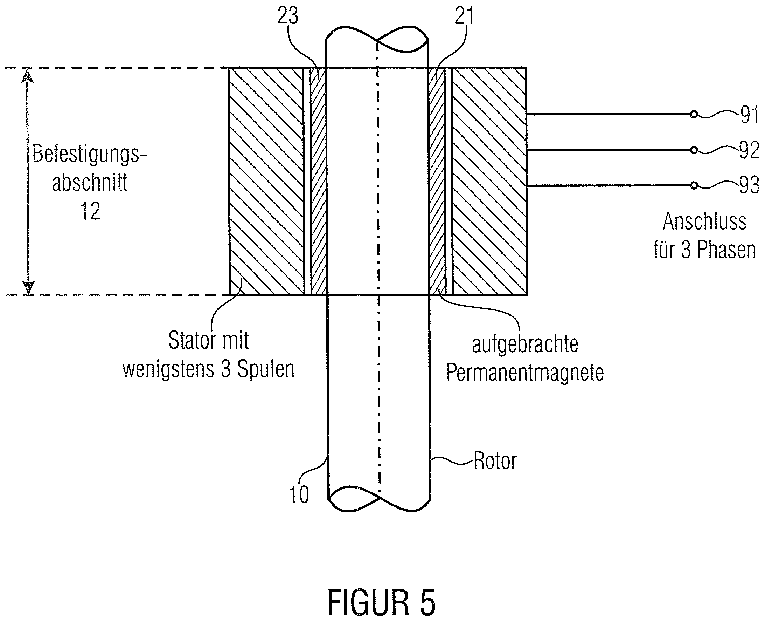

Fig. 5 zeigt einen Querschnitt durch einen Motor bzw. Generator, wobei der Motor bzw. Generator wenigstens drei Spulen aufweist, die mit drei Phasen 91, 92, 93 derart angesteuert werden, dass innerhalb des Stators ein rotierendes Magnetfeld entsteht, durch das der Rotor angetrieben wird.

Je nach Implementierung können Rotoren mit zwei Permanentmagneten, vier Permanentmagneten, sechs Permanentmagneten oder einer beliebigen anderen geraden Zahl von Permanentmagneten eingesetzt werden, wobei zur Befestigung jedes Permanentmagneten die Rotorwelle einen Bereich mit reduziertem Radius, wie beispielsweise einen in Fig. 1b gezeigten abgeflachten Bereich aufweist. Werden also sechs Permanentmagnete verwendet, so gibt es sechs abgeflachte Bereiche bzw. werden nur zwei Permanentmagnete eingesetzt, so gibt es zwei abgeflachte Bereiche.

Obgleich in Fig. 5 ein Motor bzw. Generator mit einem Stator mit drei Spulen beschrieben worden ist, kann alternativ auch ein Stator mit 6, 9, 12, 15, 18 bzw. einer entsprechenden Anzahl von Spulen, die durch drei teilbar ist, eingesetzt werden, wobei dann die Spulen entsprechend entlang des Stators angeordnet sind, die durch ein und dieselbe Phase der drei Phasen 91, 92, 93 jeweils angesteuert werden. So hat ein Stator typischerweise einen Blechstapelkörper mit Polschuhen, wobei die Spulen in Wicklungszwischenräume zwischen den Polschuhen gewickelt sind, und wobei die Polschuhe zu den äußeren Begrenzungen der Permanentmagnete hin ausgerichtet sind, also bezüglich des Stators ebenfalls radialsymmetrisch bezüglich der Achse des Rotors, wenn der Rotor in den Stator eingesetzt ist.

Die Permanentmagnete können auf verschiedene Art und Weisen mit der Rotorwelle verbunden sein, wobei eine Verbindung durch Kleben bevorzugt wird. Alternativ kann auch geschweißt, gelötet oder auf eine sonstige Art und Weise verbunden werden.

Obgleich vorstehend als Beispiel für die Bereiche mit reduziertem Querschnitt abgeflachte Bereiche dargestellt worden sind, sei darauf hingewiesen, dass die Oberfläche der abgeflachten Bereiche nicht unbedingt plan sein muss, sondern strukturiert sein kann. Darüber hinaus können die abgeflachten Bereiche auch wellig oder auf eine andere Art und Weise ausgeführt werden, wobei hier optimiert werden kann, um einen möglichst rechteckförmigen Spannungsverlauf in den Spulen des Stators durch spezielle Formung des Bereichs mit reduziertem Querschnitt zu erreichen. Ferner sei darauf hingewiesen, dass der Bereich mit reduziertem Querschnitt entlang der Länge der Rotorwelle nicht unbedingt an der gleichen Winkelkoordinate der Rotorwelle angeordnet sein muss, sondern auch gewissermaßen schraubenförmig oder spiralförmig angeordnet sein kann, wieder um z.B. besondere mechanische Eigenschaften zu erreichen oder um wieder spezielle Spannungsverläufe zu erreichen, die effizienter verarbeitbar sind als typische sinusförmige Spannungsverläufe, wie sie beispielsweise durch das Vergleichsbeispiel von Fig. 6 erhalten werden.

Fig. 1b zeigt ferner, dass die einzelnen Permanentmagnete mit Abschrägungen 90 versehen sind. Diese Abschrägungen bewirken eine weitere Formung des reduzierten bzw. einzuspeisenden Magnetfelds in Richtung einer ehre rechteckförmigen Signalverlaufsform. Darüber hinaus ist in Fig. 1b zu sehen, dass zwischen zwei Permanentmagneten ein Spalt 91 vorhanden ist. Die Permanentmagnete werden so geformt, dass der Sektor jeweils etwas kleiner als die Nenn-Sektorwinkelzahl ist, also bei der Verwendung von vier Permanentmagneten etwas kleiner als 90° ist. Damit wird sichergestellt, dass die einzelnen Permanentmagnete auch im Hinblick auf unvermeidbare Fertigungstoleranzen gut auf dem Befestigungsabschnitt der Rotorwelle aufliegen.

In den vorstehenden Figuren und in der vorstehenden Beschreibung sind diverse Merkmale des erfindungsgemäßen Gegenstands als Vorrichtungsmerkmale beschrieben worden. Es wird jedoch darauf hingewiesen, dass diese Beschreibung gleichermaßen auch als Beschreibung von entsprechenden Verfahrensschritten gesehen werden kann. Darüber hinaus gilt die vorstehende Beschreibung eines Verfahrensschritts analog auch als Beschreibung eines entsprechenden Vorrichtungsmerkmals.

## Patentansprüche

1. Rotor mit folgenden Merkmalen:
einer Rotorwelle (10) mit einem Befestigungsabschnitt (12) entlang eines Befestigungsbereichs der Welle; und
einer Mehrzahl von Permanentmagneten (21, 22, 23, 24), die in dem Befestigungsabschnitt (12) an der Rotorwelle (10) befestigt sind, wobei die Permanentmagnete (21, 22, 23, 24) so geformt sind, dass sie formschlüssig in dem Befestigungsabschnitt (12) mit der Rotorwelle (10) verbunden sind, und wobei die Mehrzahl von Permanentmagneten in vertikaler bzw. horizontaler Richtung magnetisiert sind (52), wenn die Rotorwelle (10) so ausgerichtet ist, dass eine Symmetrieachse der Permanentmagnete mit einer horizontalen bzw. vertikalen Bezugsachse zusammenfällt,
wobei die Rotorwelle in dem Befestigungsabschnitt vier abgeflachte Bereiche (31, 32, 33, 34) mit bezüglich eines kreisrunden Querschnitts in nicht abgeflachten Bereichen reduziertem Radius aufweist, so dass eine radial gemessene Dicke eines Permanentmagneten (21) in einem abgeflachten Bereich größer als in einem angrenzenden nicht abgeflachten Bereich mit nicht reduziertem Radius der Rotorwelle (10) ist,
wobei die vier abgeflachten Bereiche (31, 32, 33, 34) symmetrisch entlang des Umfangs der Rotorwelle angeordnet sind, wobei jeder abgeflachte Bereich einen Winkelsektor von wenigstens 35° und höchstens 45° umfasst, wobei ein abgeflachter Bereich bezüglich des Winkelsektors kleiner als zwei benachbarte nicht abgeflachte Bereiche zusammen ist, und wobei ein Permanentmagnet in einem abgeflachten Bereich und zwei angrenzenden nicht abgeflachten Bereichen in dem Befestigungsabschnitt formschlüssig mit der Rotorwelle (10) verbunden ist.

2. Rotor nach einem der vorhergehenden Ansprüche,
bei dem die Permanentmagnete durch einen sich radial bezüglich der Rotorwelle erstreckenden Spalt (91) beabstandet sind.

3. Rotor nach einem der vorhergehenden Ansprüche,
bei dem Ecken der Permanentmagnete (21, 22, 23, 24) Abschrägungen (90) aufweisen.

4. Rotor nach einem der vorhergehenden Ansprüche,
bei dem eine ringförmige Befestigungshülse (60) um die Permanentmagnete herum angeordnet ist.

5. Rotor nach einem der vorhergehenden Ansprüche,
bei dem der abgeflachte Bereich (31, 32, 33, 34) eine plane oder nicht-plane Oberfläche hat.

6. Rotor nach einem der vorhergehenden Ansprüche, bei dem die Rotorwelle (10) in einem nicht-abgeflachten Bereich einen Durchmesser zwischen 15 mm und 30 mm aufweist, wobei ein Durchmesser in dem abgeflachten Bereich wenigstens 85% und höchstens 98% des Durchmessers in dem nicht-abgeflachten Bereich ist.

7. Rotor nach einem der vorhergehenden Ansprüche,
bei dem die Rotorwelle mit einem Radialrad (70) eines Kompressors für eine Wärmepumpe verbunden ist.

8. Elektromotor oder Generator, mit folgenden Merkmalen:
einem Rotor nach einem der vorhergehenden Ansprüche 1 bis 7;
einem Stator mit wenigstens drei Spulen; und
einem Ansteuergerät zum Ansteuern (91, 92, 93) der drei Spulen so, dass der Stator ein rotierendes magnetisches Feld auf den Rotor ausübt, wobei das Ansteuergerät Schalter aufweist, um Ansteuersignale für die drei Spulen umzuschalten.

9. Verfahren zum Herstellen eines Rotors, mit folgenden Schritten:
Befestigen einer Mehrzahl von Permanentmagneten an einem Befestigungsabschnitt einer Rotorwelle, wobei die Permanentmagnete (21, 22, 23, 24) so geformt sind, dass sie formschlüssig in dem Befestigungsabschnitt (12) mit der Rotorwelle (10) verbunden sind, und wobei die Mehrzahl von Permanentmagneten in vertikaler bzw. horizontaler Richtung magnetisiert sind (52), wenn die Rotorwelle (10) so ausgerichtet ist, dass eine Symmetrieachse der Permanentmagnete mit einer horizontalen bzw. vertikalen Bezugsachse zusammenfällt,
wobei die Rotorwelle in dem Befestigungsabschnitt vier abgeflachte Bereiche (31, 32, 33, 34) mit bezüglich eines kreisrunden Querschnitts in nicht abgeflachten Bereichen reduziertem Radius aufweist, so dass eine radial gemessene Dicke eines Permanentmagneten (21) in einem abgeflachten Bereich größer als in einem angrenzenden nicht abgeflachten Bereich mit nicht reduziertem Radius der Rotorwelle (10) ist,
wobei die vier abgeflachten Bereiche (31, 32, 33, 34) symmetrisch entlang des Umfangs der Rotorwelle angeordnet sind, wobei jeder abgeflachte Bereich einen Winkelsektor von wenigstens 35° und höchstens 45° umfasst, wobei ein abgeflachter Bereich bezüglich des Winkelsektors kleiner als zwei benachbarte nicht abgeflachte Bereiche zusammen ist, und wobei ein Permanentmagnet in einem abgeflachten Bereich und zwei angrenzenden nicht abgeflachten Bereichen in dem Befestigungsabschnitt formschlüssig mit der Rotorwelle (10) verbunden ist.

## Claims

1. Rotor, comprising:
a rotor shaft (10) with a mounting portion (12) along a mounting region of the shaft; and
a plurality of permanent magnets (21, 22, 23, 24) mounted in the mounting portion (12) on the rotor shaft (10), wherein the permanent magnets (21, 22, 23, 24) are shaped such that they are connected to the rotor shaft (10) in an interlocking manner in the mounting portion (12), and wherein the plurality of permanent magnets are magnetized (52) in vertical or horizontal direction when the rotor shaft is oriented such that a symmetry axis of the permanent magnets coincides with a horizontal or vertical reference axis,
wherein the rotor shaft comprises, in the mounting portion, four flattened regions (31, 32, 33, 34) with a radius reduced with respect to a circular cross-section in non-flattened regions, such that a radially measured thickness of a permanent magnet (21) in a flattened region is greater than in an adjacent non-flattened region with non-reduced radius of the rotor shaft (10),
wherein the four flattened regions (31, 32, 33, 34) are arranged symmetrically along the circumference of the rotor shaft, wherein each flattened region includes an angular sector of at least 35° and at the most 45°, wherein a flattened region is smaller with respect to the angular sector than two adjacent non-flattened regions together, and wherein a permanent magnet in a flattened region and two adjacent non-flattened regions in the mounting portion is connected to the rotor shaft (10) in an interlocking manner.

2. Rotor according to any of the previous claims,
wherein the permanent magnets are spaced apart by a gap (91) extending radially with respect to the rotor shaft.

3. Rotor according to any of the previous claims,
wherein the corners of the permanent magnets (21, 22, 23, 24) comprise bevels (90).

4. Rotor according to any of the previous claims,
wherein a ring-shaped mounting sleeve (60) is arranged around the permanent magnets.

5. Rotor according to any of the previous claims,
wherein the flattened region (31, 32, 33, 34) has a planar or non-planar surface.

6. Rotor according to any of the previous claims, wherein the rotor shaft (10) has a diameter between 15 mm and 30 mm in a non-flattened region, wherein a diameter in the flattened region is at least 85% and at the most 98% of the diameter in the non-flattened region.

7. Rotor according to any of the previous claims,
wherein the rotor shaft is connected to a radial impeller (70) of a compressor for a heat pump.

8. Electric motor or generator, comprising:
a rotor according to any of the above claims 1 to 7;
a stator with at least three coils; and
a control device for controlling (91, 92, 93) the three coils such that the stator applies a rotating magnetic field to the rotor, wherein the control device comprises switches for switching control signals for the three coils.

9. Method for producing a rotor, comprising:
mounting a plurality of permanent magnets on a mounting portion of a rotor shaft, wherein the permanent magnets (21, 22, 23, 24) are shaped such that they are connected to the rotor shaft (10) in the mounting portion (12) in an interlocking manner, and wherein the plurality of permanent magnets are magnetized (52) in vertical or horizontal direction, when the rotor shaft (10) is oriented such that a symmetry axis of the permanent magnets coincides with a horizontal or vertical reference axis,
wherein the rotor shaft comprises, in the mounting portion, four flattened regions (31, 32, 33, 34) with a radius reduced with respect to a circular cross-section in non-flattened regions, such that a radially measured thickness of a permanent magnet (21) in a flattened region is greater than in an adjacent non-flattened region with non-reduced radius of the rotor shaft (10),
wherein the four flattened regions (31, 32, 33, 34) are arranged symmetrically along the circumference of the rotor shaft, wherein each flattened region includes an angular sector of at least 35° and at most 45°, wherein a flattened region is smaller with respect to the angular sector than two adjacent non-flattened regions together, and wherein a permanent magnet in a flattened region and two adjacent non-flattened regions in the mounting portion is connected to the rotor shaft (10) in an interlocking manner.

## Revendications

1. Rotor, aux caractéristiques suivantes:
un arbre de rotor (10) avec un segment de fixation (12) le long d'une zone de fixation de l'arbre; et
une pluralité d'aimants permanents (21, 22, 23, 24) qui sont fixés à l'arbre de rotor (10) dans le segment de fixation (12), les aimants permanents (21, 22, 23, 24) étant formés de sorte qu'ils soient connectés en liaison de forme dans le segment de fixation (12) à l'arbre de rotor (10), et la pluralité d'aimants permanents étant aimantés dans la direction verticale ou horizontale (52) lorsque l'arbre de rotor (10) est orienté de sorte qu'un axe de symétrie des aimants permanents coïncide avec un axe de référence horizontal ou vertical,
dans lequel l'arbre de rotor présente dans le segment de fixation quatre zones aplaties (31, 32, 33, 34) de rayon réduit par rapport à une section circulaire dans les zones non aplaties, de sorte qu'une épaisseur d'un aimant permanent (21) mesurée radialement soit plus grande dans une zone aplatie que dans une zone non aplatie adjacente de rayon non réduit de l'arbre de rotor (10),
dans lequel les quatre zones aplaties (31, 32, 33, 34) sont disposées symétriquement le long du pourtour de l'arbre de rotor, chaque zone aplatie comportant un secteur angulaire d'au moins 35° et de tout au plus 45°, où une zone aplatie par rapport au secteur angulaire est plus petite que deux zones non aplaties adjacentes ensemble, et un aimant permanent étant, dans une zone aplatie et deux zones non aplaties adjacentes dans le segment de fixation, connecté en liaison de forme à l'arbre de rotor (10).

2. Rotor selon l'une des revendications précédentes,
dans lequel les aimants permanents sont espacés par un entrefer (91) s'étendant radialement par rapport à l'arbre du rotor.

3. Rotor selon l'une des revendications précédentes,
dans lequel les coins des aimants permanents (21, 22, 23, 24) présentent des chanfreins (90).

4. Rotor selon l'une des revendications précédentes,
dans lequel un manchon de fixation annulaire (60) est disposé tout autour des aimants permanents.

5. Rotor selon l'une des revendications précédentes,
dans lequel la zone aplatie (31, 32, 33, 34) présente une surface plane ou non plane.

6. Rotor selon l'une des revendications précédentes, dans lequel l'arbre de rotor (10) présente dans une zone non aplatie un diamètre compris entre 15 mm et 30 mm, un diamètre dans la zone aplatie étant d'au moins 85% et de tout au plus 98% du diamètre dans la zone non aplatie.

7. Rotor selon l'une des revendications précédentes,
dans lequel l'arbre de rotor est connecté à une roue radiale (70) d'un compresseur pour une pompe de chaleur.

8. Moteur électrique ou générateur, aux caractéristiques suivantes:
un rotor selon l'une des revendications précédentes 1 à 7;
un stator avec au moins trois bobines; et
un dispositif d'activation destiné à activer (91, 92, 93) les trois bobines de sorte que le stator exerce un champ magnétique rotatif sur le rotor, le dispositif d'activation présentant des commutateurs destinés à commuter les signaux d'activation pour les trois bobines.

9. Procédé de fabrication d'un rotor, aux étapes suivantes consistant à:
fixer une pluralité d'aimants permanents à un segment de fixation d'un arbre de rotor, les aimants permanents (21, 22, 23, 24) étant formés de sorte qu'ils soient connectés en liaison de forme dans le segment de fixation (12) à l'arbre de rotor (10), et la pluralitñé d'aimants permanents étant aimantés dans la direction verticale ou horizontale (52) lorsque l'arbre du rotor (10) est orienté de sorte qu'un axe de symétrie des aimants permanents coïncide avec un axe de référence horizontal ou vertical,
dans lequel l'arbre de rotor présente dans le segment de fixation quatre zones aplaties (31, 32, 33, 34) de rayon réduit par rapport à une section circulaire dans les zones non aplaties, de sorte qu'une épaisseur d'un aimant permanent (21) mesurée radialement soit plus grande dans une zone aplatie que dans une zone non aplatie adjacente de rayon non réduit de l'arbre de rotor (10),
dans lequel les quatre zones aplaties (31, 32, 33, 34) sont disposées symétriquement le long du pourtour de l'arbre de rotor, chaque zone aplatie comportant un secteur angulaire d'au moins 35° et de tout au plus 45°, où une zone aplatie par rapport au secteur angulaire est plus petite que deux zones non aplaties adjacentes ensemble, et un aimant permanent étant, dans une zone aplatie et deux zones non aplaties adjacentes dans le segment de fixation, connecté en liaison de forme à l'arbre de rotor (10).
